# EUROPEAN PATENT SPECIFICATION

(11) **EP 4 432 504 B1**
(45) Date of publication and mention of the grant of the patent: **13.08.2025**
(21) Application number: 23162560.9
(22) Date of filing: 17.03.2023
(51) Int. Cl.: H02J 3/00

(54) **CONTROL DEVICE**
STEUERVORRICHTUNG
DISPOSITIF DE COMMANDE

(43) Date of publication of application: 18.09.2024
(73) Proprietor: Hitachi, Ltd., Tokyo 100-8280 (JP)
(72) Inventor: ROLANDI, Tanis, London, EC2Y 5AJ (GB); TAMAYO, Efrain, Tokyo, 100-8280 (JP); SAITO, Nao, Tokyo, 100-8280 (JP)
(74) Representative: MERH-IP Matias Erny Reichl Hoffmann Patentanwälte PartG mbB

(56) References cited:
- US-A1- 2014 297 206
- US-A1- 2020 372 588
- US-A1- 2022 247 174

## Description

The present subject-matter relates at least to a control device, a system including said control device a method and computer-program product as set forth in the appended claims.

### Background

Renewable energy certificates (RECs) are currently used as a means for businesses to support renewable energy development through their purchasing power. However, these certificates can be purchased separately from electricity from a renewable source, which has led to assertions of "greenwashing" by corporations.

Large organizations often struggle to report their upstream scope 3 emissions accurately due to the difficulty of aggregating data on carbon emissions and renewable energy consumption in their upstream supply chain. They often rely on estimations based on cost rather than actual emissions or energy consumed.

Related applications, such as CN109034840A, describe a green card trading method and system based on clean energy generation, and, such as EP3906601A2, describe a method for generating real time guarantees of origin and determining the operative state of an electricity network.

US2022247174A1 discloses a demand response system, matching demand to response, and also using renewable energy certificates.

Technically, however, it is still a challenge that green energy supply is not stable and industrial decarbonising efforts require collaboration between many participants in the chains. The demand of green energy includes a lot of consumers and changes on an hourly basis. So, it is difficult for utilities to understand the demand, and to use the generated green energy efficiently on an hourly basis.

It is desirable to provide a solution which at least enables optimizing the energy demand of energy consumers in particular in view of avoiding carbon emissions based on energy production data.

### Problem and Solution

The objective technical problem underlying the present application is to provide an improved control device, system, control method and related computer-program product which enable to optimize the distribution of timed energy attribute certificates of multiple energy consumers from a supply chain in order to reduce the carbon emission footprint of the whole supply chain
This is solved by the subject-matter as set forth in the appended claims.

A first aspect relates to a control device. The control device is configured to process the energy demand of energy consumers, wherein the present application is focused on large scale energy consumers, such as factories, business places and the like. In other words, the term "energy consumers" shall preferably not include private households or private energy consumers. The energy consumers are connected to a power grid.

The control device may be embodied by a dedicated control apparatus with the further units and functionality provided by hardware and/or software modules included therein and/or the control device may be embodied by a computer or a set of computers which include, among others, one or more processors and one or more storage units on which a computer program is stored and operated which provides the below explained units and technical functions. Accordingly, a further aspect of the present application relates to a computer program product which, when executed on a computer, provides the functions as discussed below.

The control device, as well as the later described system, computer program product and method, are preferably, i.e. in an optional preferred configuration, configured for at least calculating an optimal distribution of timed energy attribute certificates for the energy demand from participants in an organisation supply chain, such as factories or facilities with high energy consumption, for a predefined fraction of their activity related to the supply chain, to energy suppliers within a predefined plurality of geographical areas. The predefined fraction of the activity may relate to any kind of activity, such a producing, manufacturing, transportation, etc. An organisation may be a company or a business entity which has one or more energy consumers, such as factories, and which also relies on a supply chain also having one or more energy consumers. Each of the energy consumers, especially in the supply chain, may be located at a different location worldwide. Getting an overview over all these different locations covered by the supply chain was difficult so far and therefore CO2 reduction was difficult. The present concept is able to process data from each energy consumer even in the supply chain and calculate the demand of timed energy attribute certificates (which may also be named granular RCEs, GRCEs, or simply certificates or renewable/green energy certificates in the following). Since the location of each energy consumer is known to the control device and so on in advance or included in the input data, the distribution for each geographical area can be planned by the present concept as well. An aggregation of the demand data received from the different energy consumers in the supply chain allows to bundle the demand data and receive and overall picture.

The control device includes a plurality of different units, which may be separated hardware and/or software entities or which all or part of them may be provided by specifically devised hardware and/or software entities. One of the units included in the control device is a first input unit configured to receive historical energy demand data and/or operation data of one or more energy consumers. It shall be noted that, preferably, the received historical energy demand data is measured time-series data, wherein measured can also be described as "metered" data in the following. In other words, the input unit may receive input from sensors, current meters, or other measurement apparatus and the input includes measured data that represents an energy demand/consumption of an energy consumer, such as a factory or parts of a factory, measured over time, i.e. times-series data. Said data therefore includes the measurements values, such as consumer electrical power, and the measurement time of each measurement value. Preferably, said data is provided in the form of a time-plotted curve, a table including time and the measurement value or the like. The input data may also include location identifiers.

Further, the control device includes a demand analysing unit configured to determine forecast demand energy data based on the received historical energy demand data for each energy consumer. In other words, the demand analysing unit applies, e.g.,, mathematical, e.g. statistical prediction models, or a trained artificial intelligence(Al)/machine learning (ML) algorithm, which have been trained with real measured historical energy demand data, to generate a forecast of energy consumption/demand of each energy consumer. The forecast, preferably, is generated for a predefined future time period (which may also be named forecast horizon), such as one day (i.e. the next day), two days, one week or the like in the future. The forecast data, i.e. the forecast demand energy data is generated as a time-series as well and preferably with a sampling interval of 1 hour, optionally the sampling time interval may also be 2 hours, 4 hours, 12 hours or 1 day, however 1 hour is considered most preferable in view of accuracy and avoiding to large data amounts. The sampling interval may also be named "granularity" in the following. As an example, granularity of 1 hour means that the data provides one value (on the Y axis) for each hour (on the X axis/times axis). In other words, the forecast data express the forecasted energy demand for each hour of each energy consumer.

Further, there is provided a demand estimation generation unit configured to determine estimate demand energy data based on the received operation data of the one or more energy consumers for each energy consumer. The demand estimation generation unit is an optional entity (or the demand analysing unit may also be optional) which depends on the availability of input sources. The difference here shall be that the demand analysing unit receives measured/metered demand/consumption data while the demand estimation generation unit receives parameters and data which allow to estimate an energy demand of an energy consumer which cannot provide measured/metered data for whatever reason. If it is known that all energy consumers connected to the control device, e.g., can provide metered data, the demand estimation generation unit can be omitted, deactivated, or it may of course also be provided and not used.

Further, the control device includes an aggregation unit configured to aggregate the forecast demand energy data and/or the estimate demand energy data of a plurality of energy consumers to aggregated energy demand data. Here it is noted that the term "plurality of energy consumers" in this feature shall comprise more than one energy consumer, however, the set of energy consumers for which an aggregation is performed may be set in advance or may be decided from case to case or the like. For example, if energy consumers of a certain geographical region shall be controlled the aggregation may be further subdivided in providing aggregation values for predetermined subregions. Of course, however, all connected energy consumers may also be aggregated or a set of more than one aggregated values may be determined. This can be pre-configured or set by a user from case to case. Other examples of an aggregation may relate to energy consumers of a certain supply chain and in a certain region, further subdivided into subgroups of energy consumers relating to different technical tasks or manners or energy consumption, and the like. In other words, the above term of this very feature "plurality of energy consumers" shall preferably relate to a predefined group or sub-group (or more than one thereof) of energy consumers. The aggregation may be, in one example, a mathematical addition operation of the single demands from the forecast and/or estimation data for each time interval, e.g. for each hour. Therefore, the aggregation unit enables to output the hourly energy demand of a group of energy consumers or all energy consumers connected to the control device which for a predefined future time interval, such as the next day, etc.

It is noted that the control device, for receiving input data via the first input data may be connected to the energy consumers, at least, by way of wired or wireless data connection lines which allow transmitting data and/or signals, such as command signals, etc., preferably electrically.

Further, there is a second input unit provided that is configured to receive green certificate data (alternatively called timed energy attribute certificates) wherein said data includes information about the availability of these timed renewable energy certificates. Timed renewable energy certificates are certificates issued and sold by authorized parties of the energy market or the like which certify that a certain amount of energy (electrical power) has been produced by renewable energy sources. Further, the timed certificates provide a time stamp on the certificates so that a granular buying of renewable energy can be certified. In other words, instead of buying renewable energy certificates for the estimated consumption of the next year at once at the start of a year, an energy consumer may buy timed renewable energy certificates where the timing of the consumption and the timing of the production match each other, e.g. with a granularity of 1 hour, some hours, a day or the like. In even other words, the timed certificates allow to buy for each time interval exactly the amount of renewable energy certificates which is needed by the energy consumer in said time interval (e.g. 1h).

Further, the control device includes an optimization unit configured to compare the aggregated energy demand data with the available timed renewable energy certificates of a predetermined future time period and to adjust the forecast demand energy data and/or the estimate demand energy data so as minimize the costs for the timed renewable energy certificates or granular certificates(GCs, RCEs or the like in the following) and the carbon emissions by the energy consumers. This is based on a multi-objective optimization model, for which mathematical simulations, analytical models and/or trained AI/MLs may be used. In other words, solutions are generated for matching the available amount of timed renewable energy certificates per time interval with the aggregated energy demand per time interval. The matching is performed for each time interval of the predetermined future time period, wherein the granularity helps to perform a fine matching compared to simply using a coarsely approximated amount for one year in advance or the like.

Further, based on the solutions generated by the optimization unit, a control instruction unit is configured to instruct the energy consumers to adapt their energy consumption in accordance with the adapted forecast demand energy data and/or the estimate demand energy data, wherein the adaption is preferably performed based on an automated selection of a solution generated by the optimization unit or alternatively displayed to the energy consumers. Additionally or alternatively, the control instruction unit may be configured to send instruction data to a plurality of energy suppliers at a plurality of locations to distribute the timed renewable energy certificates to the energy consumers according to their location.

The control device tackles several objectives, including the problem of lack of transparency and accuracy in the reporting of carbon emissions and the consumption of renewable energy by large organizations which is significant as it makes it difficult for them to accurately report on their own carbon footprint and to make informed decisions about decarbonization efforts. Up to now, systems handling renewable energy certificates (RECs) do not provide sufficient granularity to understand the true carbon emissions and renewable energy consumption of their operations and their supply chain. The lack of accessibility and granularity in the data on carbon emissions and renewable energy consumption in the upstream supply chain makes it difficult for organizations to accurately track and report on their own carbon footprint and to make informed decisions on decarbonization efforts. Therefore, the herein described approach focuses on connecting participants in a supply chain or the like (and possibly from multiple locations) to energy suppliers, forecasting their energy demand, and optimising the amount of granular free carbon energy certifications minimising cost of procurement and consequent emissions, which also allows obtaining a holistic and optimal aggregated view of the amount of certifications needed to decarbonise the whole supply chain. Technically especially important is that the control device as introduced above, uses real input data from the energy consumers, such as measurement data about electrical power consumed (energy consumption), and feeds back, in an feedback loop, as an output of the control device, command/instructions signals which instruct an automated adaption of the energy consumption of the energy consumers. This may, e.g., include that certain energy consumption times or loads will be time-shifted (within a flexibility window of said consumer) so that energy consumption takes place during other time intervals when there is enough (or a demandmatching amount) of renewable energy available/providable by the grid which then leads to a reduction of carbon emissions in the overall picture. Therefore, in other words, the control device provided herewith can enable to reduce carbon emissions by controlling energy consumers such that they consume more energy stemming from renewable sources.

In a preferred option, the control device may be configured as follows: The first input unit is configured to receive historical energy demand data which preferably include: historical energy demand data at a granularity of a predetermined time interval, a location identifier, and/or a line identifier of each energy consumer. The location identifier identifies the geographical location of the respective energy consumer. The line identifier identifies the power line to which the energy consumer is connected or, if more than one, which line thereof is analysed. The predetermined time interval of the sampling rate/granularity shall preferably be 1 hour, and of course other values may be used as well as described before.

Further, the demand analysing unit may further be configured to resample (convert to the predetermined sampling rate of 1 hour) the received historical energy demand data if the granularity is different from the predetermined time interval by usual known means. The detection/determination of the granularity may be automatedly performed by the unit. The resampling may be performed by known mathematical/computational methods/algorithms. And, to perform standardization of the historical energy demand data, wherein standardization shall encompass that the output data format is identical over the entire set of output data, and/or to apply forecasting operations to generate the forecast demand energy data. Forecasting operations include all applicable known mathematical and computational methods to forecast data based on actual and historical data. The simplest method of course may include copy and paste of historical values into the future time period. More complex models may be used which also may include external factors, such as weather and the like.

This option further improves the accuracy of the forecast energy demand data which is a key factor for receiving/generating accurate optimization results further downstream in the process being executed by the control device.

In a further preferred option, the demand analysing unit, for standardization performing, may be configured to decompose the time series historical energy demand data, if applicable after the resampling step, into seasonal data, trend data, and residual data. The output and generation of such decomposed time series data enables identification of patterns and trends in the energy consumption data which again improves the accuracy of the optimization results further downstream.

Moreover it may be configured to apply an additive (decomposition) module/model/algorithm which may be configured to perform at least one or all of the steps of: detrending the historical energy demand data by fitting a linear regression to the historical energy demand data and subtracting the linear trend from the original historical energy demand data; computing the seasonal component by taking the average of the detrended historical energy demand data for each period of a season; and computing the residual component as the difference between the original historical energy demand data and the sum of the trend and seasonal components of the historical energy demand data.

Furthermore, the demand analysing unit may further be configured to reconstruct the original time series historical energy demand data using the additive decomposition model: y(t) = T(t) + S(t) + R(t). The method may then use a moving average approach to compute the trend, seasonal, and residual components and allows for the specification of the type of moving average, the number of periods for the moving average, and the frequency of the data. The output of thereof is a set of the trend, seasonal, and residual components of the (historical) energy consumption/demand data which allow to generate very accurate forecast data and the like.

In a further preferred option, the demand analysing unit is configured to determine the forecast demand energy by being configured to execute at least one of the steps: reading the output of the standardization step containing the trend data, seasonal data, and residual data of the historical energy demand data; splitting said data into training and testing sets; fitting an auto-regressive integrated moving average (ARIMA) model to the training data; segmenting the trend data into one or more trend segments (wherein the number is decided depending on each case and preferably it is decided based on a preferred time length of each segment, such as one day, or very preferably one week); fitting with a linear regression each trend segment; extending the last segment to a forecast horizon; adding the seasonal component back to the linear trend to generate the final forecast; applying K-means clustering to identify patterns in the forecasted data and/or preferably further simplify the forecasted data.

Moreover, optionally, the method for forecasting time series data, may comprise the steps of: modelling the dependence among data (points of the data) using an Auto-Regressive (AR) component, an Integrated (I) component, and a Moving Average (MA) component; fitting the model to the historical energy demand data using maximum likelihood estimation (MLE); and using the estimated model to forecast future values of the time series forecast demand data. Preferably, the AR component models the current data points as a linear function of the previous p data points, the I component models the current data points as a linear function of the difference between the current data points and the previous data points, and the MA component models the current data points as a linear function of the error term at previous q time steps. The parameters of the model (p, d, q) represent the order of the AR, I, and MA components respectively. The output of the method is a set of forecasts (forecast demand data) for future time steps.

The above forecast processing brings about increased accuracy for the forecast demand data with slight increase of computing efforts, while alternatively and as described above forecasting processing may also rely on relatively simple and computationally cheap(er) approaches and it may even include least complex methods such as copy and pasting of historical data into future time periods.

The above explained optional subfunctions of the demand analysing unit may be embodied by hardware and/or software sub-units of the demand analysing unit or, as valid for all other processing steps, they may be (in part) be performed on a remote server/computer.

In a further preferred option, the first input unit is configured to input received operation data into the demand estimation generation unit, wherein the operation data includes at least one of: a location identifier (to allocate the matched RCEs), a line identifier (for energy consumers/facilities with multiple lines), a line run time in hours (the activity period for such facility), a line estimated demand (electricity capacity for the facility), a line minimum start time (the lower flexible time where activity could begin), a line maximum stop time (the upper flexible time where activity should end), and a weekend inclusion flag (whether the facility operates on weekends or not); and wherein
the demand estimation generation unit is configured to generate the estimate demand energy data by performing:
- determine a flexibility window based on the line run time, line minimum start time, line maximum stop time, and weekend inclusion flag,
- estimate energy usage within the flexibility window based on the line estimated demand, and
- generating estimate demand energy data, such as a demand curve for the facility line, based on the determined flexibility window and estimated energy usage.

The flexibility window shall preferably be construed to indicate a time period to which additional energy demand could be shifted where an energy consumer is operating and has capacity to add additional energy demand.

In other words, the above optional configuration of the demand estimation generation unit provides an accurate estimation approach for energy consumers/facilities which are not able/do not provide metered energy demand data. The detection of whether an energy consumer provides historical measured energy demand data or operation data may be performed, as a sub-function/unit, by the first input unit which may compare the received data with sample data to make the detection or the like. In case of the above processing of the estimation, as said before, the output of generated estimate demand energy data is of high accuracy while other estimation approaches may also be used, which, e.g., mainly use planned/scheduled operation time data and load level data as operation data to make an estimation. Therefore, the present disclosure is not limited to the specific example above which is a preferred one.

In a further preferred option, the optimization unit is configured to compare the aggregated energy demand data with the available timed renewable energy certificates of a predetermined future time period and to adjust the forecast demand energy data and/or the estimate demand energy data so as minimize the costs for the timed renewable energy certificates and the carbon emissions by the energy consumers, by performing at least one of the steps:
- applying a multi-objective optimization model for balancing the objectives of minimizing the cost of GCs and minimizing carbon emissions, wherein a Pareto front approach is applied to generate a set of non-dominated solutions, and
- selecting a solution from the Pareto front.

This multi-objective approach, which may be one preferred example for implementing and specifically configuring the optimization unit may include the following: for optimizing the use of renewable energy sources and minimizing emissions in a supply chain, the optimization may in other words comprise one or more or all of the steps of:
- Providing a multi-objective optimization model for balancing the objectives of minimizing the cost of granular certificates (i.e. GCs) and minimizing emissions, utilizing a Pareto front approach to create a set of non-dominated solutions.
- Utilizing decision variables, including load requirement, load sourced from renewable energy, and product start time, to model the optimization problem.
- Defining parameters, including RCE cost, emission factor, minimum and maximum start times for energy consumers (alternatively called products or facilities), power requirement of energy consumers, and duration of power required for energy consumers.
- Utilizing an energy consumerdemand, e.g. a curve over time, to determine the load requirement for each location and time.
- Applying optimization constraints, such as minimum and maximum start times for energy consumers, load requirement being equal to the sum of power requirements for all energy consumers at a given location and time, and load sourced from renewable energy being less than or equal to load requirement.
- Selecting the most applicable solution from the Pareto front, if the Pareto front yields more than one solution.

Again, it is noted that the control device and the system as described further below are able to process input data in two different ways, in one case the input data is processed by using forecasting techniques to produce forecast demand data for each facility line and/or energy consumer based on the received historical data, wherein in case the granularity is not hourly, it may resample the received data; in the other case operation parameters may be used, such as one or more of: the line run time, line minimum start time, line maximum stop time, and/or weekend inclusion flag to determine a flexibility window for shifting energy demand and use the line/energy consumer estimated demand to estimate energy usage within flexibility window(s). This allows to achieve high accuracy while being flexible for different types of input data formats which can all be processed in an automated manner.

Furthermore, preferably, a Pareto front optimization approach is applied to balance the multiple objectives of minimizing the cost of granular certificates and minimizing emissions. To this end, multiple objectives to be optimized are defined and a set of non-dominated solutions is determined, where a solution is considered non-dominated if no other solution exists that is better in all objectives, through the use of decision variables, parameters, and constraints. These solutions are represented in a graphical representation known as Pareto front. Then, preferably in an automated fashion, the most applicable solution is selected from the Pareto front that balances the multiple objectives, as it may yield more than one solution. This Pareto front optimization approach allows for a more efficient and effective way to balance the trade-offs between the use of renewable energy sources, minimizing emissions and costs in the supply chain/among energy consumers. Furthermore, again, leads to reduced carbon emissions because based on the optimization result, a set of instructions for adapting the workload, operation times, and operation plans in general of each energy consumer or for groups of energy consumers.

Another aspect of the present disclosure may relate to a system including the control device according to at least one of the previous aspects and options, one or more energy consumers connected to the control device for bidirectional data exchange, and one or more energy production side information communication channels for receiving information about at least renewable energy certificates.

Another aspect of the present disclosure may relate to system including the control device according to at least one of the previous aspects and options, one or more energy consumers connected to the control device for bidirectional data exchange, wherein the control device is an integrated sub-unit of an energy trading and risk management system.

The system and method that will be described below for connecting participants/energy consumers/facilities in a supply chain to energy suppliers within a defined geographical area and optimizing the use of renewable energy sources and minimizing emissions, can be integrated as a module within an Energy Trading and Risk Management (ETRM) system. This module can be utilized by energy suppliers to procure granular certificates (GCs) for the supply chain, or by large organizations that manage their own energy needs to reduce their scope 3 emissions. The ETRM system can utilize the input data provided by the participants, process it using the optimization model, and match the energy demand with the optimal amount of timed renewable energy certifications (RECs) issued by the geographical energy mix or any location-based Power Purchase Agreement (PPA) within the supply chain that is applicable to the system. Additionally, this integration allows the system to obtain the necessary market data, energy prices, and other relevant information from the ETRMsystems across the relevant locations, ensuring the optimization model is using the most current and accurate data available. This integration allows for a more efficient and effective procurement and management of GCs and an effective reduction of emissions within the supply chain.

Another aspect of the present disclosure may relate to a method for adjusting the energy demand of energy consumers, including the steps of
- receiving historical energy demand data and/or operation data of one or more energy consumers, wherein the received historical energy demand data is measured time-series data,
- determining forecast demand energy data-based on the received historical energy demand data for each energy consumer,
- determining estimate demand energy data based on the received operation data of the one or more energy consumers for each energy consumer,
- aggregating the forecast demand energy data and the estimate demand energy data of a plurality of energy consumers to aggregated energy demand data,
- receiving green certificate data including information about the availability of timed renewable energy certificates,
- comparing the aggregated energy demand data with the available timed renewable energy certificates of a predetermined future time period and to adjust the forecast demand energy data and/or the estimate demand energy data so as minimize the costs for the timed renewable energy certificates and the carbon emissions by the energy consumers, and
- sending instruction data to the energy consumers to adapt their energy consumption in accordance with the adapted forecast demand energy data and/or the estimate demand energy data and/or sending instruction data to a plurality of energy suppliers at a plurality of locations to distribute the timed renewable energy certificates to the energy consumers according to their location.

The steps may be performed, in a further aspect, by a computer program product configured to execute, when run on a computer, these steps.

Neither the method nor the computer program product are restricted to the steps explicitly mentioned above and they may also perform processing steps in analogy to the control device and its options as explained further above.

Summarizing, a solution is provided which offers technical benefits especially with regard to adjusting the carbon emissions of energy consumers, such as factories, supply chains, etc and getting an accurate picture about the entire supply chain carbon footprint.

In the following the claimed subject matter will be further explained based on at least one preferential example with reference to the attached drawings, wherein:
- Figure 1: shows a schematic overview of a system including a control device as disclosed herein;
- Figure 2: shows a schematic overview over a control device as disclosed herein,
- Figure 3: shows a more detailed schematic overview of a control device as disclosed herein;
- Figure 4: shows schematically the data flow between entities of a system as disclosed herein;
- Figure 5: shows schematically sub-functions of the control device as disclosed herein;
- Figure 6: shows a flowchart of a processing performed in the control device as disclosed herein.

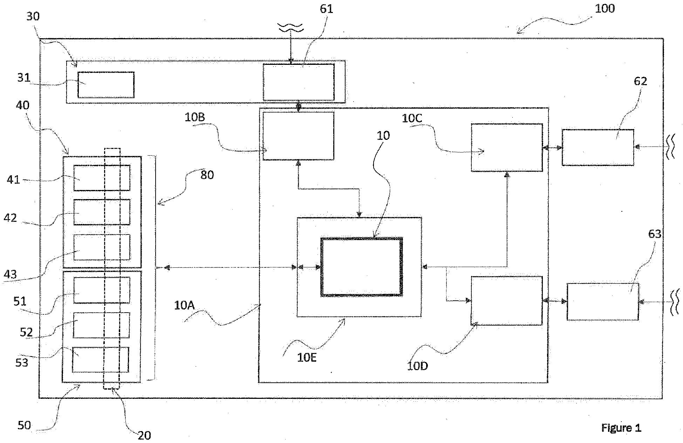

Figure 1 shows a system 100 with the control device 10 as described herein being communicably connected with the energy consumer side shown on the left side of the Figure 1 and depicting an exemplary supply chain 80 with energy consumers 41-43 in one location 40 and with energy consumers 51-53 in another location 50 which are all part of the supply chain 80 of the company/organisation 31 located at again another location 30. The energy producers are further depicted by reference signs 61 to 63 wherein the energy producer 61 may be located at the same location 30 as the organisation 31, and the further energy producers may be located differently and for example at the locations of the supply chain, i.e. indicated by 30 and 40. The locations may be geographical locations or areas including states, countries, continents or the like. The energy suppliers 61-63 may receive data from the outside, e.g., market data, production data, certificate-related data and so on.

Communication lines shown as arrows or double-ended arrows between the different entities may be constituted as wired or wireless electronic lines, optical lines or the like for transmitting, sending or exchanging signals/data between the entities. The boxes drawn in the Figure represent, preferably, system boundaries of an entity whereas the system boundaries may also be set differently in other non-shown examples. Further, the control device 10 may be integrated part of an energy trading and risk management (ETRM) system 10A which is shown schematically as a further box.

As noted above, the left side of the Figure 1 shows example representations of a plurality of energy consumers 41-53 in a supply chain which may be further (sub-)grouped by locations 40, 50 depending on different and/or multiple criteria. In the non-limiting example of Figure 1 there are two sub-groups 40, 50 of energy consumers of one supply chain wherein the subgroups 40, 50 are differentiated by the locations of the energy consumers A/B, such as geographical regions. In this non-limiting example there is a location A and a location B, and of course more or less groups, locations, and the like may be formed and may be present. The activities of the different energy consumers can be summarized by reference sign 20.

The control device 10 may also be included in an ETRM system 10A in which the control device 10 is integrated as one of one or more sub-unit/sub-modules. It is noted that Figure 1 shows in this connection further on-premise sub-systems 10B to 10D which can be installed, as hardware or software, in each facility of an energy supplier 61-63. In such a configuration, the control device 10 may be located within a central sub-system 10E which may also be a "cloud"-based software/hardware.

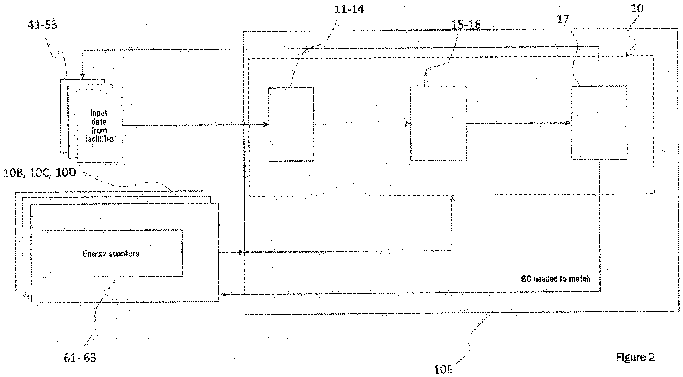

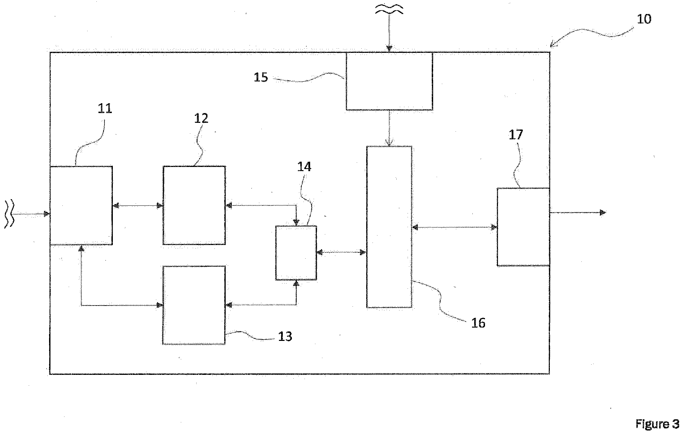

Figure 2 shows a simplified representation of the system according to Figure 1 in which the input and output of the central system 10E and/or the control device 10 is shown in more detail and specifically it also shows a summary of the internal configuration of the control device 10 which is shown in more detail in Figure 3.

Figure 2 shows that input data, such as historical energy demand data and/or operation data of energy consumers (facilities) 41-53 is input into the control device 10 having subunits 11 to 17 which are explained in more detail in connection with Figure 3. The output, such as instruction data, from the control device 10 to the energy consumers 41-53 is also shown by the upper arrow in Figure 3. Even further, the input from the energy supply-side indicated by reference signs 61-63 is also shown and the energy suppliers 61-63 may include the software or hardware on-premise sub-units which are enabled to communicate with the control device 10. Also the energy suppliers 61 to 63 may receive input from the control device 10, such as data/information about the timed energy attribute certificates which need to be matched due to the calculations performed by the control device 10/10E.

Figure 3, as noted above, shows mainly the internal configuration of a preferred example of the control device 10 of the present disclosure. The control device 10 includes, preferably at least, the following units as shown in Figure 3:
- a first input unit 11 configured to receive historical energy demand data and/or operation data of one or more energy consumers 41-43,51-53, wherein the received historical energy demand data is measured time-series data,
- a demand analysing unit 12 configured to determine forecast demand energy data based on the received historical energy demand data for each energy consumer,
- a demand estimation generation unit 13 configured to determine estimate demand energy data based on the received operation data of the one or more energy consumers for each energy consumer,
- an aggregation unit 14 configured to aggregate the forecast demand energy data and the estimate demand energy data of a plurality of energy consumers to aggregated energy demand data,
- a second input unit 15 configured to receive certificate data including information about the availability of timed renewable energy certificates,
- an optimization unit 16 configured to compare the aggregated energy demand data with the available timed renewable energy certificates of a predetermined future time period and to adjust the forecast demand energy data and/or the estimate demand energy data so as minimize the costs for the timed renewable energy certificates and the carbon emissions by the energy consumers, and
- a control instruction unit 17 configured to send instruction data to the energy consumers 41-43,51-53 or the sub-groups 40, 50 thereof to adapt their energy consumption in accordance with the adapted forecast demand energy data and/or the estimate demand energy data. Further, the control instruction unit 17 may also send instruction data to the energy suppliers 61 to 63 about the certificates to be matched by them.

Principally the presently disclosed control device 10 may be enabled to handle at least two different types of input data from the energy consumer side: measurement/metered data which indicates/includes the energy consumption/demand of each energy consumer on the energy consumer side. This data may be generated by respective sensors, metering devices, measurement devices, etc. and a computer or the measurement device itself of each energy consumer may be configured to transmit the measurement data of the electrical power consumption/demand to the control device 10 via the depicted communication connections. The transmission is preferably automated and takes places in pre-defined transmission intervals or the like automatically.

Further, the measurement/metered data are herein also referred as historical energy demand data and they are called "historical" because they indicate the demand/consumption of a time which lays previous to the transmission time. The transmission intervals may be fixedly set or may be variable and preferably they cover a couple of hours, a day, a week or the like of the data before the transmission time. Furthermore, the historical (energy demand) data can further differ in regard of their sampling resolution/granularity and the present control device 10 is most preferably configured to further process historical data which has a granularity of 1 hour (intervals). If the received input, i.e. the historical data received by the first input unit 11 has a different granularity, the first input unit 11 may be configured to automatedly detect it, by way of known mathematical and/or comparison operations, and initiate a resampling in the units of the control device 10 further downstream the process flow which is described in more detail below.

The other kind/type of input data may be provided as input if an energy consumer cannot or does not provide metered historical, i.e. real measured demand data. Such operation(al) data is transmitted to the first input unit 11 which is enabled to automatedly detect which type of data it has received, e.g. by way of comparing it to predetermined expected data types or any other way known to be usable for this automation.

The operation data include parameters and values thereto which allow to estimate an energy demand, such as intended operations times of an energy consumer, the respective work load during the operation times, etc.

With the input data received, the control device 10 can start to determine future energy demands and preferably aggregated for all of the energy consumers in a certain group, parts of the supply chain, or other assemblies of energy consumers which may be even pre-defined or set case by case.

Figure 2 shows that the input data from the energy consumer side is processed mainly by the units 11 - 14 of the control device 10 and the result of this processing is provided, within the control device 10, to the optimization unit 16 which is configured to optimize the energy demand based on further input data received via the second input unit 15 and the further input being shown on the lower side of Figure 2. Specifically, the before explained entities of the energy producing side provide input data relating to RCE market prices, the renewable power grid generation, the availability of PPA's, other costs and the like (i.e. the input to the second input unit 15 can be summarized as marked data). The result of the optimization is then output to a control instruction unit 17 which may return the result as information or for further processing to the energy producing side (lower arrow from unit 17 in Fig. 2) and it sends the control instruction signal via the feedback communication line (upper arrow from the unit 17 in Fig. 2) back to the energy consumer side. In a preferred application scenario of the present disclosure, the energy consumer side has intelligent smart meters or other controller devices (not shown) which can receive the control instruction signals from the unit 17 and which are configured to automatically adapt the energy consumption of each consumer or each consumer group in accordance with the optimization result, e.g., by automatedly controlling the connection to the grid in accordance with flexibility/operational windows or by adapting the load of the consumers, etc. In this way, the optimized result provided by the unit 16 and instructed via the unit 17 is a feedback control signal which enables the entire system 100 to operate in a fully automated manner, preferably.

Further, the optimization result which may be based on an aggregate may be automatically split up at the energy consumer side so that the energy consumption target for each consumer 41-53 may be determined. Such splitting may be automatically performed in the not-shown other controller devices on the energy consumer side and in accordance with known operations, such as splitting it based on the consumption fraction of an energy consumer in a sub-group, such as breaking down the optimization result to each line identifier based on a multiple of the input data, e.g. if the optimization result requires an overall cut down of energy . consumption by 0.9, each line/energy consumer may be forced to apply the factor of 0.9 to the initially planned energy consumption, or such as other known/applicable methods which may be used.

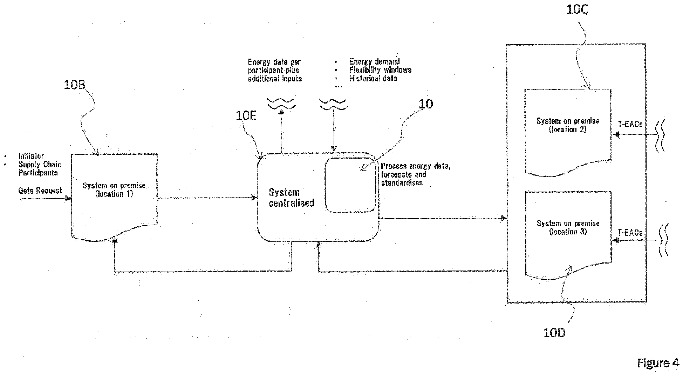

Figure 4 further shows a flow of data/signals between different entities of the system 100 as shown in Figure 1. The sub-units 10B to 10D (on-premise sub-units) as shown may be installed (as hardware and/or software) at each of the energy suppliers 61 to 63 which may be provided at different locations 30-50. In the example as shown by Figure 4, e.g., a request by any initiator or supply chain entity or the like may be send to the sub-unit 10B (or any other sub-unit in other examples) and the request may include to perform the timed-energy attribute certificate distribution over the entire supply chain 80. This request is passed to a central; e.g. cloudbased, sub-unit 10E including the control device 10 as described above. Based on the request, the control device 10 and/or the central sub-unit 10E request from the energy consumers 41-53 and energy suppliers 61-63 the necessary data and subsequently receive said data via the first and second input units 11 and 15 for performing the calculations as described above. Figure 4 shows the providing of said data to the control device 10 by the arrows going into the central sub-unit 10E/control device 10. Further, in order to provide data about the certificates and other market data, the sub-units 10C and 10D (in the present example) of the energy suppliers may request such data from external sources which is schematically shown by the arrows indicated with "T-EACs" (or RCE, GC, etc.). After the processing in the control device 10, the instruction unit 17 may send information/control signals back to the energy consumers and/or energy suppliers as also shown by arrows drawn out from the central sub-unit-box.

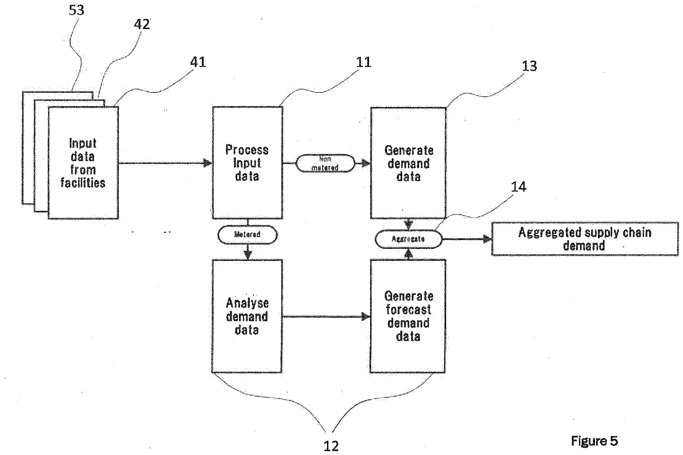

Figure 5 then shows, by means of a data flow schematic, the further processing of the input data within the control device 10 and depending on the type of the input data. The lower process path relates to processing the historical data ("metered", the upper process path relates to the processing of the operation data ("non-metered").

In regard of the lower process path the control device 10 includes the demand analysing unit 12 configured to determine forecast demand energy data based on the received historical energy demand data for each energy consumer, and in regard of the upper process path the control device 10 includes a demand estimation generation unit 13 configured to determine estimate demand energy data based on the received operation data of the one or more energy consumers 41-53 for each energy consumer.

The processed data is then merged in the aggregation unit 14 which aggregates (if available) the forecast demand energy data and (if available) the estimate demand energy data of a plurality of energy consumers 41-53 to aggregated energy demand data which reflects the future energy demand of the entire supply chain, sub-groups thereof or the like. The supply chain aggregated energy demand data is then passed to the optimization unit 16.

The further details as to the processing/generation of the different intermediate data sets will be discussed in more detail below:
To describe it in different words, the control device 10 (as well as the claimed system 100, computer program product and the respective method) can connect participants/energy consumers in a supply chain, such as factories or facilities with large energy consumption, to energy suppliers within a defined geographical area. The system/control device 100/10 may utilize input from the participants to determine their energy consumption patterns.

In regard of the lower processing path of Figure 5, preferably configured to be executed by the demand analysing unit 12, the historical data are processed to determine a forecast of a future time period. To this end, the demand analysing unit 12 receives the historical data preferably including historical energy demand data at a granularity of, e.g., 1 hour or greater, location identifier, and a line identifier (the latter two identifying each consumer 41-54). If the granularity of the historical energy data is greater than 1 hour, the data is converted to 1-hour granularity. Then it performs a standardization on the historical energy data to ensure consistency and accuracy, and it then uses forecasting techniques, e.g. provided by a sub-unit of the demand analysing unit 12, to produce an energy demand forecast, such as a curve for each facility line (with the energy consumer connected thereto) based on the historical data.

It is noted that, preferably, the converting to the desired granularity may be performed in a known manner, such as by resampling the data to an hourly frequency/sampling rate/sampling resolution/granularity (if not already).

The standardization may be performed such as to generate a predefined data format of the output data. A preferred approach for the standardization may include decomposing the (resampled) data into its seasonal (data), trend (data), and residual (data). The output of the method is the decomposition of the time series data (i.e. the historical energy demand data), enabling identification of patterns and trends in the energy consumption data.

An even more preferred implementation of the standardization uses an additive mathematical model for decomposing the energy consumption data, comprising the steps of: detrending the data by fitting a linear regression to the data and subtracting the linear trend from the original data; computing the seasonal component by taking the average of the detrended data for each period of the season; computing the residual component as the difference between the original data and the sum of the trend and seasonal components; and reconstructing the original time series using the additive decomposition model: *y*(*t*) = *T*(*t*) *+ S*(*t*) *+ R*(*t*)*.* This uses a moving average approach to compute the trend, seasonal, and residual components and allows for the specification of the type of moving average, the number of periods for the moving average, and the frequency of the data. The output of it is a set of the trend, seasonal, and residual components of the energy consumption data.

Furthermore, in a preferred example which shall not be considered to limit this disclosure and other known options/algorithms may be used as well, the demand analysing unit 12 further uses/executes a method for forecasting energy consumption data, comprising the steps of: reading the output of the standardization step containing the trend, seasonal, and residual data components of the energy consumption data; splitting the data into training and testing sets (e.g. by simply setting a predefined ratio, such as 20% to 80% or any other ration); fitting an auto-regressive integrated moving average (ARIMA) model to the training data; segmenting the trend data into one or more trend segments; fitting with a linear regression each trend segment; extending the last trend segment to a forecast horizon; adding the seasonal component back to the linear trend to generate a final forecast; applying K-means clustering to identify patterns in the forecasted data and preferably simplify the forecasted data by replacing each data point with its corresponding centroid value.

Moreover, in a preferred example, a method for forecasting time series data, comprising the steps of: modelling the dependence among the observations using an Auto-Regressive (AR) component, an Integrated (I) component, and a Moving Average (MA) component; fitting the model to the data using maximum likelihood estimation (MLE); and using the estimated model to forecast future values of the time series. The AR component models the current observation (i.e. data points) as a linear function of the previous p observations, the I component models the current observation as a linear function of the difference between the current observation and the previous observation, and the MA component models the current observation as a linear function of the error term at previous q time steps. The parameters of the model (p, d, q) represent the order of the AR, I, and MA components respectively. The output of the method is a set of forecasts for future time steps.

With regard to the upper processing path of Figure 5 the demand estimation generation unit 13 may perform the processing so as to determine estimate demand energy data, such as a demand curve or a demand table or the like, whereas in the following an example description may use the term "demand curve" as one example.

The generation of the estimate demand energy data in a preferred example comprises the steps of:
- receiving as inputs, e.g.: a location identifier (to allocate the matched RCEs), a line identifier (for facilities with multiple lines), a line run time in hours (the activity period for such facility), a line estimated demand (electricity capacity for the facility), a line minimum start time (the lower flexible time where activity could begin), a line maximum stop time (the upper flexible time where activity should end), and a weekend inclusion flag (whether the facility operates on weekends or not).
- using the line run time, line minimum start time, line maximum stop time, and weekend inclusion flag to determine a flexibility window for shifting energy demand.
- using the line estimated demand to estimate energy usage within the flexibility window.
- generating a demand curve for the facility line using the determined flexibility window and estimated energy usage.

Based on the flexibility window, the energy consumption/demand of energy consumers 41-53 may be shifted during the downstream optimization procedure wherein the flexibility window may indicate energy demands of predefined time intervals, such as the predetermined granularity, and it may further indicate whether a certain time interval may take higher energy demands or not, e.g. when the workload in a time interval is low or if the energy consumer 41-53 does not operate in a certain time interval.

In an even further modified example, the operation data may be received in addition to the historical energy demand data so that also for energy consumers 41- 53, which provide metered historical data, a flexibility window (time interval) can be computed which allows improved matching of RCEs and energy demand forecasts because, if the additional operation data are available, the optimization may consider as constraints, e.g., that certain solutions are not possible, e.g., when an energy consumer does not operate in a certain time interval it is practically not possible to shift an energy demand in such a time interval. The flexibility windows thus help to indicate which energy demand shifting is practically possible and which not, which may improve the selecting of an optimization solution.

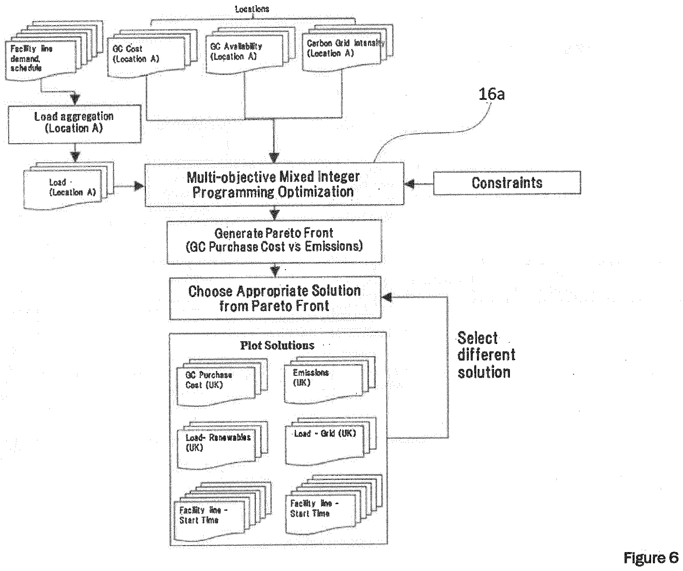

Figure 6 then shows a preferred flow of processing steps which is preferably performed in the optimization unit 16 of the control device 10, wherein there is the second input unit 15 which has received the relevant data from the energy production side/market side. The optimization may be performed in many different ways and the following example described with Figure 6 is one preferred but not limiting option.

The optimization is achieved preferably through the use of a known multi-variable optimization. The inputs to this may preferably include the local grid energy mix, emission profile of the grid or necessary emissions factors to estimate them, and the current price of the renewable technologies and RCEs in the relevant location. The optimization aims to minimize the amount of emissions generated in the operation of the facilities in the supply chain while maximizing the use of renewable energy sources.

Figure 6 schematically shows that the optimization unit 16, including the four depicted rectangular boxes/functions, performs the optimization by, preferably, a multi-objective optimization model 16a for balancing the objectives of minimizing the cost of granular certificates and minimizing emissions. Preferably, this is done by utilizing a Pareto front approach to create a set of non-dominated solutions.

The optimization model may use predetermined decision variables, including load requirement, load sourced from renewable energy, and energy consumer start time, to model the optimization problem and predefined parameters including RCE cost, emission factor, minimum and maximum start times for energy consumers, power requirement of energy consumers, and duration of power required for energy consumers. Further, constrains are predetermined, such as minimum and maximum start times for energy consumers, load requirement being equal to the sum of power requirements for all energy consumers at a given location and time, and load sourced from renewable energy being less than or equal to load requirement.

Input from the aggregation unit-part of the control device 10 relates to the forecast data and/or estimate demand energy data to determine the load requirement for each location and time. Figure 6 shows as an example that the aggregated data for location A (e.g. reference sign 40 in Fig. 1) of the consumer side is input in this example to the optimization unit 16 and its multi-objective optimization model 16a.

After the optimization has been performed, a set of solutions is available, and the optimization unit 16 is configured to select the most applicable solution from the Pareto front, as the Pareto front may yield more than one solution. The selection may be performed preferably in computerized automated manner, wherein to this end a prioritization of decision parameters may be set, e.g., prioritize emission reduction higher than RCE costs or the like.

The preferred Pareto front optimization approach allows for a more efficient and effective way to balance the trade-offs between the use of renewable energy sources, minimizing emissions and costs in the supply chain. The solutions of the pareto front may also be plotted and output to a user by way of different "views", such as shown in Figure 6.

Based on the solution selected, the instruction unit 17 may then send in a feedback loop the newly scheduled energy demands to the energy consumption side, which may be, if the energy consumer is automatically controlled/operated, implemented in an automated fashion such as by shifting operation times, workloads, etc. automatically.

Moreover, as shown in Figure 1 by reference sign 10A the control device may be provided within an Energy Trading and Risk Management (ETRM) system 10A (see Figure 1). This module can be utilized by energy suppliers to procure granular certificates (GRCEs) for the supply chain, or by large organizations that manage their own energy needs to reduce their scope 3 emissions. The ETRM system can utilize the input data provided by the participants, process it using the optimization model, and match the energy demand with the optimal amount of timed renewable energy certifications issued by the geographical energy mix or any location-based Power Purchase Agreement (PPA) within the supply chain that is applicable to the system. Additionally, this integration allows the system to obtain the necessary market data, energy prices, and other relevant information from the ETRM system, ensuring the optimization model is using the most current and accurate data available. This integration allows for a more efficient and effective procurement and management of RCEs and reduction of emissions within the supply chain.

Even further, the control device, the system and the method may use the forecasting to minimize the residue between the forecasted energy demand and the actual energy demand. This minimization of residue can also aid in minimizing ante post trading of granular certificates by suppliers. Ante post trading refers to the process of buying and selling RCEs before they are generated. By utilizing a forecasting model with minimal residue, suppliers can make more accurate predictions regarding the future demand for RCEs, thereby avoiding oversupply and financial losses associated with ante post trading.

Summarizing, a solution is provided which offers, among others, the possibility to optimize the consumption of green energy while thereby cutting CO2 emissions.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments/aspects of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computerimplemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette; a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

## Claims

1. A control device (10), for at least calculating optimal distribution of timed energy attribute certificates for the energy demand from plurality of consumers (41-53) to energy suppliers (61-63) within a predefined plurality of geographical areas (30-50),
the control device comprising
- a first input unit (11) configured to receive historical energy demand data and operation data of one or more energy consumers, wherein the received historical energy demand data is measured time-series data,
- a demand analysing unit (12) configured to determine forecast demand energy data based on the received historical energy demand data for each energy consumer,
- a demand estimation generation unit (13) configured to determine estimate demand energy data based on the received operation data of the one or more energy consumers for each energy consumer,
- an aggregation unit (14) configured to aggregate the forecast demand energy data and the estimate demand energy data of a plurality of energy consumers to aggregated energy demand data,
- a second input unit (15) configured to receive green certificate data including information about the availability of timed renewable energy certificates,
- an optimization unit (16) configured to compare the aggregated energy demand data with the available timed renewable energy certificates of a predetermined future time period and to adjust the forecast demand energy data and/or the estimate demand energy data so as minimize the costs for the timed renewable energy certificates and the carbon emissions by the energy consumers, and
- a control instruction unit (17) configured to send instruction data to the energy consumers to adapt their energy consumption in accordance with the adapted forecast demand energy data and/or the estimate demand energy data.

2. The control device according to claim 1, wherein the control instruction unit (17) is configured to send instruction data to a plurality of energy suppliers at a plurality of locations to distribute the timed renewable energy certificates to the energy consumers according to their location.

3. Control device according to claim 1 and/or 2, wherein
- the first input unit (11) is configured to receive historical energy demand data which include: historical energy demand data at a granularity of a predetermined time interval, a location identifier, and a line identifier of each energy consumer,
- the demand analysing unit (12) is further configured to resample the received historical energy demand data if the granularity is different from the predetermined time interval, to perform standardization of the historical energy demand data, and to apply forecasting operations to generate the forecast demand energy data.

4. The control device according to claim 2, wherein the demand analysing unit (12), for standardization, is configured to decompose the time series historical energy demand data, if applicable after the resampling step, into seasonal data, trend data, and residual data.

5. The control device according to at least one of claims 1 to 3, wherein the demand analysing unit (12), for standardization, is configured to apply an additive model which is configured to perform the steps of: detrending the historical energy demand data by fitting a linear regression to the historical energy demand data and subtracting the linear trend from the original historical energy demand data; computing the seasonal component by taking the average of the detrended historical energy demand data for each period of a season; and computing the residual component as the difference between the original historical energy demand data and the sum of the trend and seasonal components of the historical energy demand data.

6. The control device according to at least one of claims 4 to 5, wherein the demand analysing unit (12) is configured to determine the forecast demand energy by being configured to execute at least one of the steps: reading the output of the standardization step containing the trend data, seasonal data, and residual data of the historical energy demand data; splitting said data into training and testing sets; fitting an auto-regressive integrated moving average (ARIMA) model to the training data; segmenting the trend data into one or more trend segments; fitting with a linear regression each trend segment; extending the last trend segment to a forecast horizon; adding the seasonal component back to the linear trend to generate a final forecast; applying K-means clustering to identify patterns in the forecasted data and simplify the forecasted data by replacing each data point with its corresponding centroid value.

7. The control device according to at least one of the previous claims, wherein the first input unit (11) is configured to receive operation data of one or more energy consumers, and to input said received operation data into the demand estimation generation unit (13), wherein the operation data include at least one of: a location identifier, a line identifier, a line run time in hours, a line estimated demand, a line minimum start time, a line maximum stop time, and a weekend inclusion flag; and wherein
the demand estimation generation unit (13) is configured to generate the estimate demand energy data by performing:
- determine a flexibility window based on the line run time, line minimum start time, line maximum stop time, and weekend inclusion flag,
- estimate energy usage within the flexibility window based on the line estimated demand, and
- generating the estimate demand energy data of each energy consumer based on the determined flexibility window and estimated energy usage.

8. The control device according to at least one of the previous claims, wherein the optimization unit (16) is configured to compare the aggregated energy demand data with the available timed renewable energy certificates of a predetermined future time period and to adjust the forecast demand energy data and/or the estimate demand energy data so as minimize the costs for the timed energy attribute certificates and the carbon emissions by the energy consumers, by performing at least one of the steps:
- applying a multi-objective optimization model for balancing the objectives of minimizing the cost of RCEs and minimizing carbon emissions, wherein a Pareto front approach is applied to generate a set of non-dominated solutions, and
- selecting a solution from the Pareto front.

9. A system (100) including the control device (10) according to at least one of the previous claims, one or more energy consumers (41-53) connected to the control device (10) for bidirectional data exchange, and one or more energy suppliers (61-63) for receiving information about at least timed energy attribute certificates.

10. A system including the control device according to at least one of the previous claims 1 to 8, one or more energy consumers (41-53) connected to the control device (10) for bidirectional data exchange, wherein the control device (10) is an integrated sub-unit of an energy trading and risk management system (10A) comprising on-premise sub-systems (10B-10D) and a central sub-system (10E).

11. The system according to one of claims 9 or 10, wherein the generation of forecast demand data is performed such as to minimize the emissions of energy consumers (41-53) and cost for energy suppliers (61 -63) and subsequently energy consumers (41-53) when distributing timed energy attribute certificates.

12. A control method for adjusting the energy demand of energy consumers, including the steps of
- receiving historical energy demand data and operation data of one or more energy consumers, wherein the received historical energy demand data is measured time-series data,
- determining forecast demand energy data based on the received historical energy demand data for each energy consumer,
- determining estimate demand energy data based on the received operation data of the one or more energy consumers for each energy consumer,
- aggregating the forecast demand energy data and the estimate demand energy data of a plurality of energy consumers to aggregated energy demand data,
- receiving green certificate data including information about the availability of timed renewable energy certificates,
- comparing the aggregated energy demand data with the available timed renewable energy certificates of a predetermined future time period and to adjust the forecast demand energy data and/or the estimate demand energy data so as minimize the costs for the timed renewable energy certificates and the carbon emissions by the energy consumers, and
- sending instruction data to the energy consumers to adapt their energy consumption in accordance with the adapted forecast demand energy data and/or the estimate demand energy data, and/or
- sending instruction data to a plurality of energy suppliers at a plurality of locations to distribute the timed renewable energy certificates to the energy consumers according to their location.

13. A computer program product configured to execute, when run on a computer, the steps of the control method according to claim 12.

## Patentansprüche

1. Steuervorrichtung (10) zumindest zum Berechnen einer optimalen Verteilung zeitlich abgestimmter Energieattributzertifikate für den Energiebedarf von mehreren Verbrauchern (41-53) an Energieversorger (61-63) in einer im Voraus definierten Mehrzahl geographischer Bereiche (30-50),
wobei die Steuervorrichtung Folgendes umfasst:
- eine erste Eingangseinheit (11), die konfiguriert ist, historische Energiebedarfsdaten und Betriebsdaten eines oder mehrerer Energieverbraucher zu empfangen, wobei die empfangenen historischen Energiebedarfsdaten gemessene Zeitreihendaten sind,
- eine Bedarfsanalyseeinheit (12), die konfiguriert ist, auf der Grundlage der empfangenen historischen Energiebedarfsdaten für jeden Energieverbraucher Vorhersagebedarfs-Energiedaten zu bestimmen,
- eine Bedarfsschätzungs-Erzeugungseinheit (13), die konfiguriert ist, auf der Grundlage der empfangenen Betriebsdaten des einen oder der mehreren Energieverbraucher für jeden Energieverbraucher Schätzbedarfs-Energiedaten zu bestimmen,
- eine Aggregationseinheit (14), die konfiguriert ist, die Vorhersagebedarfs-Energiedaten und die Schätzbedarfs-Energiedaten mehrerer Energieverbraucher in aggregierte Energiebedarfsdaten zu aggregieren,
- eine zweite Eingangseinheit (15), die konfiguriert ist, Grünzertifikatdaten zu empfangen, die Informationen über die Verfügbarkeit zeitlich abgestimmter Zertifikate für erneuerbare Energien enthalten,
- eine Optimierungseinheit (16), die konfiguriert ist, die aggregierten Energiebedarfsdaten mit den verfügbaren, zeitlich abgestimmten Zertifikaten für erneuerbare Energien eines vorgegebenen zukünftigen Zeitraums zu vergleichen und die Vorhersagebedarfs-Energiedaten und/oder die Schätzbedarfs-Energiedaten auf eine Weise einzustellen, dass die Kosten für die zeitlich abgestimmten Zertifikate für erneuerbare Energien und die Kohlenstoffemissionen durch die Energieverbraucher minimiert werden, und
- eine Steueranweisungseinheit (17), die konfiguriert ist, Anweisungsdaten an die Energieverbraucher zu senden, ihren Energieverbrauch in Übereinstimmung mit den angepassten Vorhersagebedarfs-Energiedaten und/oder den Schätzbedarfs-Energiedaten anzupassen.

2. Steuervorrichtung nach Anspruch 1, wobei die Steueranweisungseinheit (17) konfiguriert ist, Anweisungsdaten an mehrere Energieversorger an mehreren Orten zu senden, die zeitlich abgestimmten Zertifikate für erneuerbare Energien gemäß ihrem Ort an die Energieverbraucher zu verteilen.

3. Steuervorrichtung nach Anspruch 1 und/oder 2, wobei
- die erste Eingangseinheit (11) konfiguriert ist, historische Energiebedarfsdaten zu empfangen, die Folgendes enthalten: historische Energiebedarfsdaten mit einer Auflösung eines vorgegebenen Zeitintervalls, eine Ortskennung und eine Leitungskennung jedes Energieverbrauchers,
- die Bedarfsanalyseeinheit (12) ferner konfiguriert ist, die Auflösung der empfangenen historischen Energiebedarfsdaten zu ändern, wenn die sich Auflösung vom vorgegebenen Zeitintervall unterscheidet, um eine Standardisierung der historischen Energiebedarfsdaten durchzuführen, und Vorhersageoperationen anzuwenden, um die Vorhersagebedarfs-Energiedaten zu erzeugen.

4. Steuervorrichtung nach Anspruch 2, wobei die Bedarfsanalyseeinheit (12) zur Standardisierung konfiguriert ist, die historischen Zeitreihen-Energiebedarfsdaten in jahreszeitliche Daten, Trenddaten und Restdaten zu zerlegen, falls dies nach dem Schritt der Änderung der Auflösung anwendbar ist.

5. Steuervorrichtung nach mindestens einem der Ansprüche 1 bis 3, wobei die Bedarfsanalyseeinheit (12) zur Standardisierung konfiguriert ist, ein zusätzliches Modell anzuwenden, das konfiguriert ist, die folgenden Schritte durchzuführen: Bereinigen der historischen Energiebedarfsdaten bezüglich des Trends, indem eine lineare Regression in die historischen Energiebedarfsdaten eingepasst wird und der lineare Trend von den ursprünglichen historischen Energiebedarfsdaten subtrahiert wird; Berechnen der jahreszeitlichen Komponente, indem der Mittelwert der bezüglich des Trends bereinigten historischen Energiebedarfsdaten für jeden Zeitraum einer Jahreszeit ermittelt wird; und Berechnen der Restkomponente als die Differenz zwischen den ursprünglichen historischen Energiebedarfsdaten und der Summe der Trendkomponente und der jahreszeitlichen Komponente der historischen Energiebedarfsdaten.

6. Steuervorrichtung nach mindestens einem der Ansprüche 4 bis 5, wobei die Bedarfsanalyseeinheit (12) konfiguriert ist, die Vorhersagebedarfsenergie zu bestimmen, indem sie konfiguriert ist, mindestens einen der folgenden Schritte auszuführen: Lesen des Ausgangs des Standardisierungsschritts, der die Trenddaten, die jahreszeitlichen Daten und die Restdaten der historischen Energiebedarfsdaten enthält; Aufteilen der Daten in Trainingsgruppen und Testgruppen; Einpassen eines autoregressiven, integrierten Modells eines gleitenden Mittelwertes (ARIMA-Modells) auf die Trainingsdaten; Segmentieren der Trenddaten in ein oder mehrere Trendsegmente; Einpassen einer linearen Regression auf jedes Trendsegment; Erweitern des letzten Trendsegments auf einen Vorhersagehorizont; Wiederhinzufügen der jahreszeitlichen Komponente zum linearen Trend, um eine endgültige Vorhersage zu erzeugen; Anwenden einer K-Mittel-Clusterbildung, um Muster in den vorhergesagten Daten zu identifizieren und die vorhergesagten Daten zu vereinfachen, indem jeder Datenpunkt durch seinen entsprechenden Schwerpunktwert ersetzt wird.

7. Steuervorrichtung nach mindestens einem der vorhergehenden Ansprüche, wobei die erste Eingangseinheit (11) konfiguriert ist, Betriebsdaten eines oder mehrerer Energieverbraucher zu empfangen und die empfangenen Betriebsdaten in die Bedarfsschätzungs-Erzeugungseinheit (13) einzugeben, wobei die Betriebsdaten mindestens eines der Folgenden enthalten: eine Ortskennung, eine Leitungskennung, eine Leitungsbetriebszeit in Stunden, einen geschätzten Leitungsbedarf, eine minimale Leitungsstartzeit, eine maximale Leitungsstoppzeit und ein Wochenendeinschlusskennzeichen; und wobei
die Bedarfsschätzungs-Erzeugungseinheit (13) konfiguriert ist, die Schätzbedarfs-Energiedaten zu erzeugen, indem Folgendes durchgeführt wird:
- Bestimmen eines Flexibilitätsfensters auf der Grundlage der Leitungsbetriebszeit, der minimalen Leitungsstartzeit, der maximalen Leitungsstoppzeit und des Wochenendeinschlusskennzeichens,
- Schätzen der Energienutzung im Flexibilitätsfenster auf der Grundlage des geschätzten Leitungsbedarfs, und
- Erzeugen der Schätzbedarfs-Energiedaten jedes Energieverbrauchers auf der Grundlage des bestimmten Flexibilitätsfensters und der geschätzten Energienutzung.

8. Steuervorrichtung nach mindestens einem der vorhergehenden Ansprüche, wobei die Optimierungseinheit (16) konfiguriert ist, die aggregierten Energiebedarfsdaten mit den verfügbaren, zeitlich abgestimmten Zertifikaten für erneuerbare Energien eines vorgegebenen zukünftigen Zeitraums zu vergleichen und die Vorhersagebedarfs-Energiedaten und/oder die Schätzbedarfs-Energiedaten auf eine Weise einzustellen, dass die Kosten für die zeitlich abgestimmten Energieattributzertifikate und die Kohlenstoffemissionen durch die Energieverbraucher minimiert werden, indem mindestens einer der folgenden Schritte durchgeführt wird:
- Anwenden eines Mehrziel-Optimierungsmodells zum Ausgleichen der Ziele des Minimierens der Kosten von RCE und des Minimierens der Kohlenstoffemissionen, wobei ein Pareto-Front-Ansatz angewendet wird, um eine Gruppe nicht dominanter Lösungen zu erzeugen, und
- Auswählen einer Lösung aus der Pareto-Front.

9. System (100), das die Steuervorrichtung (10) nach mindestens einem der vorhergehenden Ansprüche, wobei ein oder mehrere Energieverbraucher (41-53) zum bidirektionalen Datenaustausch mit der Steuervorrichtung (10) verbunden sind, und einen oder mehrere Energieversorger (61-63) zum Empfangen von Informationen zumindest über zeitlich abgestimmte Energieattributzertifikate enthält.

10. System, das die Steuervorrichtung nach mindestens einem der vorhergehenden Ansprüche 1 bis 8 enthält, wobei ein oder mehrere Energieverbraucher (41-53) zum bidirektionalen Datenaustausch mit der Steuervorrichtung (10) verbunden sind, wobei die Steuervorrichtung (10) eine integrierte Untereinheit eines Energiehandels- und Risikomanagementsystems (10A) ist, das On-Premise-Untersysteme (10B-10D) und ein zentrales Untersystem (10E) umfasst.

11. System nach einem der Ansprüche 9 oder 10, wobei die Erzeugung der Vorhersagebedarfsdaten auf eine Weise durchgeführt wird, dass die Emissionen der Energieverbraucher (41-53) und die Kosten für Energieversorger (61-63) und nachfolgend für Energieverbraucher (41-53) minimiert werden, wenn zeitlich abgestimmte Energieattributzertifikate verteilt werden.

12. Steuerverfahren zum Einstellen des Energiebedarfs von Energieverbrauchern, das die folgenden Schritte enthält:
- Empfangen von historischen Energiebedarfsdaten und Betriebsdaten eines oder mehrerer Energieverbraucher, wobei die empfangenen historischen Energiebedarfsdaten gemessene Zeitreihendaten sind,
- Bestimmen von Vorhersagebedarfs-Energiedaten auf der Grundlage der empfangenen historischen Energiebedarfsdaten für jeden Energieverbraucher,
- Bestimmen von Schätzbedarfs-Energiedaten auf der Grundlage der empfangenen Betriebsdaten des einen oder der mehreren Energieverbraucher für jeden Energieverbraucher,
- Aggregieren der Vorhersagebedarfs-Energiedaten und der Schätzbedarfs-Energiedaten mehrerer Energieverbraucher in aggregierte Energiebedarfsdaten,
- Empfangen von Grünzertifikatsdaten, die Informationen über die Verfügbarkeit zeitlich abgestimmter Zertifikate für erneuerbare Energien enthalten,
- Vergleichen der aggregierten Energiebedarfsdaten mit den verfügbaren, zeitlich abgestimmten Zertifikaten für erneuerbare Energien eines vorgegebenen zukünftigen Zeitraums und Einstellen der Vorhersagebedarfs-Energiedaten und/oder der Schätzbedarfs-Energiedaten auf eine Weise, dass die Kosten für die zeitlich abgestimmten Zertifikate für erneuerbare Energien und die Kohlenstoffemissionen durch die Energieverbraucher minimiert werden, und
- Senden von Anweisungsdaten an die Energieverbraucher, ihren Energieverbrauch in Übereinstimmung mit den angepassten Vorhersagebedarfs-Energiedaten und/oder den Schätzbedarfs-Energiedaten anzupassen, und/oder
- Senden von Anweisungsdaten an mehrere Energieversorger an mehreren Orten, die zeitlich abgestimmten Zertifikate für erneuerbare Energien gemäß ihrem Ort an die Energieverbraucher zu verteilen.

13. Computerprogrammprodukt, das konfiguriert ist, dann, wenn es auf einem Computer durchlaufen wird, die Schritte des Steuerverfahrens nach Anspruch 12 auszuführen.

## Revendications

1. Dispositif de commande (10) destiné à calculer au moins une distribution optimale de certificats d'attributs énergétiques horodatés pour la demande énergétique d'une pluralité de consommateurs (41-53) à des fournisseurs d'énergie (61-63) à l'intérieur d'une pluralité de zones géographiques (30-50) prédéfinies,
le dispositif de commande comprenant
- une première unité d'entrée (11) configurée pour recevoir des données de demande énergétique historiques et des données opérationnelles d'un ou de plusieurs consommateurs d'énergie, les données de demande énergétique historiques reçues étant des données mesurées en série temporelle,
- une unité d'analyse de demande (12) configurée pour déterminer des données de demande énergétique prévisionnelles sur la base des données de demande énergétique historiques reçues pour chaque consommateur d'énergie,
- une unité de génération d'estimation de demande (13) configurée pour estimer des données de demande énergétique sur la base des données opérationnelles reçues desdits un ou plusieurs consommateurs d'énergie pour chaque consommateur d'énergie,
- une unité d'agrégation (14) configurée pour agréger les données de demande énergétique prévisionnelles et les données de demande énergétique estimées d'une pluralité de consommateurs d'énergie en des données de demande énergétique agrégées,
- une seconde unité d'entrée (15) configurée pour recevoir des données de certificats verts incluant des informations concernant la disponibilité de certificats d'énergie renouvelable horodatés,
- une unité d'optimisation (16) configurée pour comparer les données de demande énergétique agrégées aux certificats d'énergie renouvelable horodatés disponibles d'une période temporelle future prédéterminée, et pour ajuster les données de demande énergétique prévisionnelles et/ou les données de demande énergétique estimées de manière à minimiser les coûts pour les certificats d'énergie renouvelable horodatés et les émissions de carbone par les consommateurs d'énergie, et
- une unité d'instructions de commande (17) configurée pour envoyer des données d'instructions aux consommateurs d'énergie pour adapter leur consommation d'énergie en accord avec les données de demande énergétique prévisionnelles et/ou les données de demande énergétique estimées adaptées.

2. Dispositif de commande selon la revendication 1, dans lequel l'unité d'instructions de commande (17) est configurée pour envoyer des données d'instructions à une pluralité de fournisseurs d'énergie au niveau d'une pluralité d'emplacements pour distribuer les certificats d'énergie renouvelable horodatés aux consommateurs d'énergie en accord avec leur emplacement.

3. Dispositif de commande selon la revendication 1 et/ou 2, dans lequel
- la première unité d'entrée (11) est configurée pour recevoir des données de demande énergétique historiques qui incluent : des données de demande énergétique historiques à une granularité d'un intervalle de temps prédéterminé, un identifiant d'emplacement, et un identifiant de ligne de chaque consommateur d'énergie,
- l'unité d'analyse de demande (12) est en outre configurée pour rééchantillonner les données de demande énergétique historiques reçue si la granularité est différente de l'intervalle de temps prédéterminé, pour effectuer une standardisation des données de demande énergétique historiques, et pour appliquer des opérations de prévisions afin de générer les données de demande énergétique prévisionnelle.

4. Dispositif de commande selon la revendication 2, dans lequel l'unité d'analyse de demande (12), pour la standardisation, est configurée pour décomposer les données de demande énergétique historiques en série temporelle, le cas échéant après l'étape de rééchantillonnage, en des données saisonnières, des données de tendance, et des données résiduelles.

5. Dispositif de commande selon l'une au moins des revendications 1 à 3, dans lequel l'unité d'analyse de demande (12), pour la standardisation, est configurée pour appliquer un modèle additif qui est configuré pour effectuer les étapes consistant à : éliminer toute tendance des données de demande énergétique historiques en adaptant une régression linéaire sur les données de demande énergétique historiques et en soustrayant la tendance linéaire des données de demande énergétique historiques d'origine ; calculer la composante saisonnière en prenant la moyenne des données de demande énergétique historiques sujettes à la suppression de tendance pour chaque période d'une saison ; et calculer la composante résiduelle à titre de différence entre les données de demande énergétique historiques d'origine et la somme des composantes de tendance et saisonnières des données de demande énergétique historiques.

6. Dispositif de commande selon une au moins des revendications 4 à 5, dans lequel l'unité d'analyse de demande (12) est configurée pour déterminer l'énergie de demande prévisionnelle en étant configurée pour exécuter l'une au moins des étapes consistant à : lire la sortie de l'étape de standardisation contenant les données de tendance, les données saisonnières, et les données résiduelles des données de demande énergétique historiques ; fractionner lesdites données en ensembles d'entraînement et de test ; adapter un modèle autorégressif à moyenne mobile intégrée (ARIMA) aux données d'entraînement ; segmenter les données de tendance en un ou plusieurs segments de tendance ; adapter, avec une régression linéaire, chaque segment de tendance ; élargir le dernier segment de tendance à un horizon prévisionnel ; ajouter la composante saisonnière à nouveau à la tendance linéaire pour générer une prévision finale ; appliquer un partitionnement en k-moyennes pour identifier des motifs dans les données prévisionnelle et simplifier les données prévisionnelles en remplaçant chaque point de données par sa valeur centroïde.

7. Dispositif de commande selon l'une au moins des revendications précédentes, dans lequel la première unité d'entrée (11) est configurée pour recevoir des données opérationnelles d'un ou de plusieurs consommateurs d'énergie, et pour entrer lesdites données opérationnelles reçues dans l'unité de génération d'estimation de demande (13), les données opérationnelles incluant au moins un élément parmi : un identifiant d'emplacement, un identifiant de ligne, un temps de fonctionnement de ligne en heures, une demande estimée de ligne, un temps de démarrage minimum de ligne, un temps d'arrêt maximum de ligne, et un drapeau d'inclusion de week-end ; et dans lequel
l'unité de génération d'estimation de demande (13) est configurée pour générer les données de demande énergétique estimées en effectuant opération les opérations consistant à :
- déterminer une fenêtre de flexibilité sur la base du temps de fonctionnement de ligne, du temps de démarrage minimum de ligne, du temps d'arrêt maximum de ligne, et du drapeau d'inclusion de week-end,
- estimer un usage d'énergie à l'intérieur de la fenêtre de flexibilité sur la base de la demande estimée de ligne, et
- générer les données de demande énergétique estimées de chaque consommateur d'énergie sur la base de la fenêtre de flexibilité déterminée et de l'usage d'énergie estimée.

8. Dispositif de commande selon l'une au moins des revendications précédentes, dans lequel l'unité d'optimisation (16) est configurée pour comparer les données de demande énergétique agrégées aux certificats d'énergie renouvelable horodatés disponibles d'une période temporelle future prédéterminée, et pour ajuster les données de demande énergétique prévisionnelles et/ou les données de demande énergétique estimées de manière à minimiser les coûts pour les certificats d'attributs énergétiques horodatés et les émissions de carbone par les consommateurs d'énergie, en effectuant l'une au moins des étapes suivantes :
- appliquer un modèle d'optimisation multi-objectif pour équilibrer les objectifs consistant à minimiser les coûts des certificats d'énergie renouvelable et à minimiser les émissions de carbone, une approche de front de Pareto étant appliquée pour générer un ensemble de solutions non dominées, et
- sélectionner une solution à partir du front de Pareto.

9. Système (100) incluant le dispositif de commande (10) selon l'une au moins des revendications précédentes, un ou plusieurs consommateurs d'énergie (41-53) connectés au dispositif de commande (10) pour un échange de données bidirectionnel, et un ou plusieurs fournisseurs d'énergie (61-63) pour recevoir des informations concernant au moins des certificats d'attributs énergétiques horodatés.

10. Système incluant le dispositif de commande selon l'une au moins des revendications 1 à 8, un ou plusieurs consommateurs d'énergie (41-53) connectés au dispositif de commande (10) pour un échange de données bidirectionnel, dans lequel le dispositif de commande (10) est une sous-unité intégrée d'un système ETRM (Energy Trading and Risk Management) de négoce en énergie et de gestion des risques (10A) comprenant des soussystèmes sur site dits « on-premise » (10B-10D) et un sous-système central (10E).

11. Système selon l'une des revendications 9 ou 10, dans lequel la génération de données de demande prévisionnelles est effectuée de manière à minimiser les émissions de consommateurs d'énergie (41-53) et les coûts pour les fournisseurs d'énergie (61-63) et, par conséquent, les consommateurs d'énergie (41-53) lors une distribution de certificats d'attributs énergétiques horodatés.

12. Procédé de commande pour ajuster la demande énergétique de consommateurs d'énergie, incluant les étapes consistant à :
- recevoir des données de demande énergétique historiques et des données opérationnelles d'un ou de plusieurs consommateurs d'énergie, les données de demande énergétique historiques reçues étant des données mesurées en série temporelle,
- déterminer des données de demande énergétique prévisionnelles sur la base des données de demande énergétique historiques reçues pour chaque consommateur d'énergie,
- déterminer des données de demande énergétique estimées sur la base des données opérationnelles reçues desdits un ou plusieurs consommateurs d'énergie pour chaque consommateur d'énergie,
- agréger les données de demande énergétique prévisionnelles et les données de demande énergétique estimées d'une pluralité de consommateurs d'énergie en des données de demande énergétique agrégées,
- recevoir des données de certificats verts incluant des informations concernant la disponibilité de certificats d'énergie renouvelable horodatés,
- comparer les données de demande énergétique agrégées aux certificats d'énergie renouvelable horodatés disponibles d'une période temporelle future prédéterminée, et ajuster les données de demande énergétique prévisionnelles et/ou les données de demande énergétique estimées de manière à minimiser les coûts pour les certificats d'énergie renouvelable horodatés et les émissions de carbone par les consommateurs d'énergie, et
- envoyer des données d'instructions aux consommateurs d'énergie pour adapter leur consommation d'énergie en accord avec les données de demande énergétique prévisionnelles et/ou les données de demande énergétique estimées adaptées, et/ou
- envoyer des données d'instructions à une pluralité de fournisseurs d'énergie au niveau d'une pluralité d'emplacements pour distribuer les certificats d'énergie renouvelable horodatés aux consommateurs d'énergie en accord avec leur emplacement.

13. Produit de programme d'ordinateur configuré pour exécuter, quand il fonctionne sur un ordinateur, les étapes du procédé de commande selon la revendication 12.
